# EUROPÄISCHE PATENTSCHRIFT

(11) **EP 2 711 538 B1**
(45) Veröffentlichungstag und Bekanntmachung des Hinweises auf die Patenterteilung: **27.03.2019**
(21) Anmeldenummer: 13185643.7
(22) Anmeldetag: 24.09.2013
(51) Int. Cl.: F02N 11/08, F02N 11/10

(54) **Verfahren und Vorrichtung zum Betrieb einer Start/Stopp-Automatik**
Method and Device for the Operation of an Automatic Start/Stop System
Procédé et dispositif de fonctionnement d'un système de démarrage/arrêt automatique

(30) Priorität: 25.09.2012 DE 102012217289
(43) Veröffentlichungstag der Anmeldung: 26.03.2014
(73) Patentinhaber: Ford Global Technologies, LLC, Dearborn, MI 48126 (US)
(72) Erfinder: Christen, Urs, 52072 Aachen (DE); Busch, Rainer, 52076 Aachen (DE); Müller-Lerwe, Armin, 50170 Kerpen (DE); Petridis, Themi Philemon, Bishop's Stortford, Hertfordshire CM23 3NG (GB); Hesketh, David, Ingatestone, Essex CM4 9LN (GB)
(74) Vertreter: Dörfler, Thomas

(56) Entgegenhaltungen:
- DE-A1- 10 251 765
- DE-A1-102006 028 339
- DE-A1-102006 053 515
- DE-A1-102012 100 978

## Beschreibung

Die Erfindung betrifft ein Verfahren und eine Vorrichtung zum Betrieb einer Start/Stopp-Automatik in einem Kraftfahrzeug mit Verbrennungsmotor, manuell betätigtem Getriebe und pedalbetätigter Kupplung, gemäß den Oberbegriffen der Patentansprüche 1 und 7. Ein derartiges Verfahren und eine derartige Vorrichtung sind aus der DE 10 2006 028 339 A1 bekannt.

Mikro- und Mildhybridfahrzeuge sind Kraftfahrzeuge mit Verbrennungsmotor, einem eher konventionell dimensionierten elektrischen Startermotor, Stopp/Start-Automatik und Bremsenergierückgewinnung zum Laden eines eher kleinen Starter-Akkus. Mittels der Stopp/Start-Automatik kann der Verbrennungsmotor automatisch gestoppt, d.h. abgeschaltet werden, wenn kein Vortrieb benötigt wird, und neu gestartet werden, wenn der Fahrer wieder Leistung abruft. Dadurch kann der Kraftstoffverbrauch gesenkt werden.

Bei der Stopp/Start-Automatik gibt es zwei Varianten. Die gebräuchlichste Variante für Kraftfahrzeuge mit manuell betätigtem Getriebe ermöglicht das Stoppen und Neustarten des Verbrennungsmotors nur dann, wenn das Getriebe in Leerlaufstellung (SIN; Stop In Neutral) ist. Bei dieser Variante muss der Fahrer in den Leerlauf schalten, wenn er sich z. B. einer Verkehrsampel nähert, an der er anzuhalten hat, damit die Stopp/Start-Automatik den Verbrennungsmotor stoppt. Doch haben nicht alle Fahrer die Gewohnheit, in den Leerlauf zu schalten, wenn sie sich einer roten Ampel nähern, sondern sie bremsen und warten lieber mit eingelegtem Gang und niedergetretener Kupplung, so dass die SIN-Stopp/Start-Automatik den Verbrennungsmotor nicht automatisch stoppen kann. Für diese Fahrer ist eine Variante besser geeignet, die das Stoppen und Neustarten des Verbrennungsmotors bei eingelegtem Gang (SIG; Stop In Gear) ermöglicht, und zwar nicht nur im Stillstand, sondern schon bei niedrigen Fahrzeuggeschwindigkeiten. SIG-Stopps und -Starts werden üblicherweise ausgelöst, wenn bei eingelegtem Gang sowohl das Kupplungspedal als auch das Bremspedal getreten wird. SIG-Stopps und -Starts dürfen aber nur dann durchgeführt werden, wenn der Verbrennungsmotor vollständig vom Antriebsstrang abgekuppelt ist.

Die DE 10 2009 012 573 A1 offenbart ein Verfahren zum Betrieb einer Stopp/Start-Automatik in einem Kraftfahrzeug mit Verbrennungsmotor, manuell betätigtem Getriebe und pedalbetätigter Kupplung, wobei der Verbrennungsmotor unter vorbestimmten Bedingungen auch bei eingelegtem Gang automatisch gestoppt bzw. neu gestartet wird, wobei die Bedingungen, unter denen der Verbrennungsmotor automatisch neu gestartet wird, einen Indikator umfassen, der anzeigt, dass ein automatischer Neustart des Verbrennungsmotors sicher ist, und der auf Signalen von einem Sensor basiert, der die Position eines Kupplungskolbens und damit der Kupplungsplatten direkt abfühlt und mit dem sogen. Griffpunkt der Kupplung vergleicht, der nach einem komplizierten Verfahren ermittelt werden muss, da der Griffpunkt in Abhängigkeit von einer Vielzahl von Faktoren variiert.

Dieses und andere bekannte Verfahren zum Betrieb einer Stopp/Start-Automatik bei eingelegtem Gang benötigen alle eine relativ aufwändige Sensorik, und außerdem gibt es Unterschiede zwischen dem Stopp/Start-Verhalten bei den verschiedenen SIN- und SIG-Strategien, was besonders für Fahrer, die unterschiedliche Kraftfahrzeuge mit unterschiedlichen Stopp/Start-Strategien benutzen, gewöhnungsbedürftig und möglicherweise irritierend ist.

Der Erfindung liegt die Aufgabe zu Grunde, eine SIG-Strategie bereitzustellen, die mit möglichst geringem Sensorik-Aufwand Fahrern besonders viel Bequemlichkeit bietet.

Diese Aufgabe wird durch ein Verfahren und eine Vorrichtung zum Betrieb einer Start/Stopp-Automatik gemäß den unabhängigen Patentansprüchen gelöst. Vorteilhafte Weiterbildungen der Erfindung sind in den abhängigen Ansprüchen angegeben.

Erfindungsgemäß wird für die Stopp/Start-Bedingungen sowohl in der SIN-Strategie als auch in der SIG-Strategie zwischen Indikatoren unterschieden, die anzeigen, dass ein Neustart bzw. Stopp sicher ist, und solchen, die anzeigen, dass ein Neustart erwünscht bzw. ein Stopp zweckmäßig ist, weil ein Stopp des Verbrennungsmotors voraussichtlich Kraftstoff einspart. Dadurch kann man sowohl die SIN-Strategie als auch die SIG-Strategie mittels derselben Sensorik-Ausstattung für Bedienelemente des Kraftfahrzeugs durchführen, und zwar beide sehr ergonomisch, d.h. auf eine Weise, durch die ein Fahrer nicht irritiert wird.

In einer bevorzugten Ausführungsform wird ein gestoppter oder stoppender Verbrennungsmotor automatisch neu gestartet, wenn als der Indikator, dass ein Neustart sicher ist, entweder das Kupplungspedal niedergetreten ist oder das Getriebe in Leerlaufstellung ist, und wenn als der Indikator, der anzeigt, dass der Fahrer einen Neustart wünscht, das Fahrpedal getreten ist. Außerdem wird der gestoppte oder stoppende Verbrennungsmotor bei eingelegtem Gang automatisch neu gestartet, wenn als Indikator, der anzeigt, dass ein Neustart sicher ist, sowohl die Fahrzeuggeschwindigkeit über einem voreingestellten unteren Schwellenwert liegt als auch das Kupplungspedal getreten oder niedergetreten ist, und wenn außerdem als Indikator, der anzeigt, dass der Fahrer einen Neustart wünscht, die Position des Bremspedals von Getreten nach Nichtgetreten wechselt. Der Verbrennungsmotor wird auch dann automatisch neu gestartet, wenn als Indikator, der anzeigt, dass ein Neustart sicher ist, sowohl die Fahrzeuggeschwindigkeit unter dem voreingestellten unteren Schwellenwert liegt als auch das Kupplungspedal niedergetreten ist sowie als optionale Bedingung die Handbremse gelöst ist, und wenn außerdem als Indikator, der anzeigt, dass der Fahrer einen Neustart wünscht, die Position des Bremspedals von Getreten nach Nichtgetreten wechselt.

Die hierin für Pedalpositionen verwendeten Begriffe "losgelassen" und "niedergetreten" beziehen sich auf die praktisch unbelastete Anfangsstellung bzw. die Endstellung an oder nahe an einem Anschlag, und der Begriff "getreten" bezieht sich auf eine beliebige Zwischenstellung zwischen Anfangs- und Endstellung.

Zusätzlich zu SIN- und SIG-induzierten, d.h. fahrerinduzierten Neustarts des Verbrennungsmotors sind in der Regel systeminduzierte Neustarts möglich, d.h. Neustarts, die erforderlich sind, weil irgendein Subsystem des Kraftfahrzeugs momentan nur mit einem laufenden Verbrennungsmotor voll funktionsfähig sein kann. Derartige systeminduzierte Neustarts werden im Rahmen der Erfindung vorzugsweise nur dann erlaubt, wenn das Getriebe in Leerlaufstellung ist und das Kupplungspedal losgelassen ist, oder wenn das Kupplungspedal niedergetreten ist und die Fahrzeuggeschwindigkeit über einem voreingestellten unteren Schwellenwert liegt sowie als optionale Bedingung das Bremspedal getreten ist.

In einer bevorzugten Ausführungsform umfassen die Bedingungen, unter denen der Verbrennungsmotor automatisch gestoppt wird, zwei Indikatoren, die anzeigen, dass ein automatischer Stopp des Verbrennungsmotors sicher und zweckmäßig ist, nämlich einen Indikator, der anzeigt, dass ein Stopp sicher ist, und einen Indikator, der anzeigt, dass ein Stopp zweckmäßig ist, wobei der Indikator, der anzeigt, dass ein Stopp sicher ist, auf Signalen der zwei Sensoren basiert, die die Leerlaufstellung des Getriebes bzw. die Position des Kupplungspedals direkt abfühlen.

Vorzugsweise wird ein gerade laufender Verbrennungsmotor automatisch gestoppt, wenn jeweils eine voreingestellte Zeit lang erstens der Verbrennungsmotor läuft, zweitens das Fahrpedal losgelassen ist, drittens die Fahrzeuggeschwindigkeit unter einem voreingestellten oberen Schwellenwert liegt, viertens das Kupplungspedal losgelassen ist und fünftens das Getriebe in Leerlaufstellung ist.

Außerdem wird vorzugsweise ein gerade laufender Verbrennungsmotor automatisch gestoppt, wenn jeweils eine voreingestellte Zeit lang erstens der Verbrennungsmotor läuft, zweitens das Fahrpedal losgelassen ist, drittens die Fahrzeuggeschwindigkeit unter einem voreingestellten oberen Schwellenwert liegt, viertens das Kupplungspedal niedergetreten ist und fünftens das Bremspedal getreten ist.

Die voreingestellte Zeit, während der die verschiedenen genannten Bedingungen erfüllt sein müssen, kann für all diese Bedingungen dieselbe sein, oder sie kann für einige oder alle Bedingungen unterschiedlich sein.

Zur Realisierung der Erfindung genügt es, dass der Sensor, der die Position des Kupplungspedals direkt abfühlt, lediglich erfasst, ob das Kupplungspedal losgelassen oder getreten oder niedergetreten ist. Das heißt, es genügt ein wesentlich einfacherer Sensor als ein Sensor, der den Kupplungszustand der Kupplung exakt ermittelt, d.h., ob ein vorbestimmtes Drehmoment übertragen wird oder nicht. Eine genaue Kenntnis des Kupplungszustands ist bei der Erfindung nicht nötig, weil ein Indikator, der anzeigt, dass ein Neustart oder ein Stoppen sicher ist, im Falle, dass gerade ein Gang eingelegt ist, auch auf Informationen über die aktuelle Fahrzeuggeschwindigkeit basiert. In bestimmten Geschwindigkeitsbereichen kann der Verbrennungsmotor sicher gestoppt oder neu gestartet werden, während dies bei anderen Geschwindigkeiten unsicher wäre.

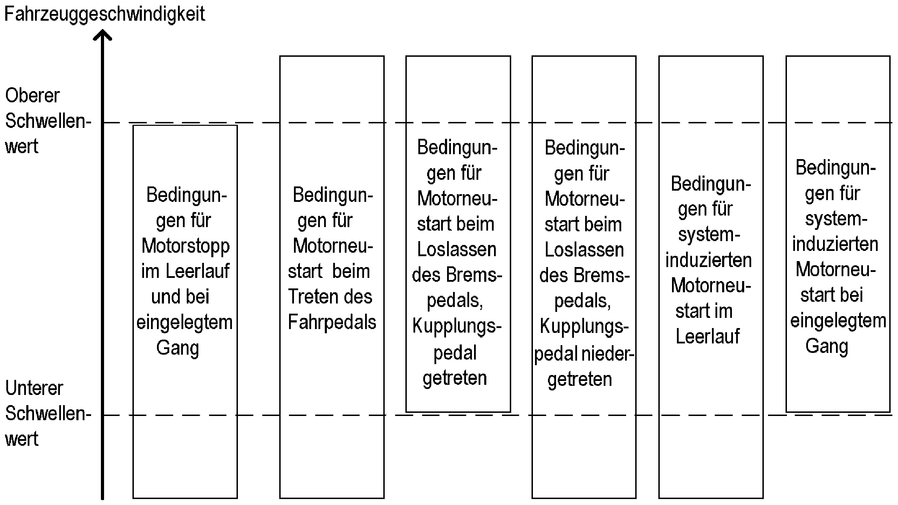

Es folgt eine Beschreibung von Ausführungsbeispielen anhand der Zeichnung. Deren einzige Figur zeigt Fahrgeschwindigkeitsbereiche, in denen unterschiedliche Bedingungen für das Stoppen oder Neustarten eines Verbrennungsmotors mit Stopp/Start-Automatik aktiv sind.

Bei einem Kraftfahrzeug mit Verbrennungsmotor, manuell betätigtem Getriebe, pedalbetätigter Kupplung und Stopp/Start-Automatik wird häufig verlangt, dass für einen sicheren automatischen Neustart des Verbrennungsmotors zwei unabhängige Bedingungen erfüllt sein müssen. Für die verbreitete SIN-Strategie muss das Getriebe in der Leerlaufstellung sein, so dass der Antriebsstrang offen ist, damit es keine Antriebsverbindung zwischen dem Verbrennungsmotor und den Fahrzeugrädern gibt. Wenn dann der Fahrer auf das Kupplungspedal tritt, was den Antriebsstrang ebenfalls öffnet, wird ein Motorneustart ausgelöst. Diese Redundanz in den Neustartbedingungen ermöglicht die Verwendung von relativ preiswerten Sensoren. Auch wenn einer der Sensoren nicht korrekt anzeigt, dass der Antriebsstrang offen ist, kann der Motorneustart auf eine sichere Weise durchgeführt werden. Und auch wenn der Fahrer versehentlich das Kupplungspedal berührt, z.B. beim Einstellen des Sitzes, und es sofort wieder loslässt, kann noch ein sicherer Motorneustart durchgeführt werden.

Es wird nun eine Stopp/Start-Steuerstrategie beschrieben, die nicht voraussetzt, dass der Fahrer in den Leerlauf schaltet, bevor der Verbrennungsmotor neu gestartet wird, was einem größeren Prozentsatz aller Fahrer entgegenkommt. Diese Strategie benutzt nur den Satz von Sensoren für Bedienelemente, der bei Kraftfahrzeugen mit SIN-Strategie gewöhnlich vorhanden ist. Dieser Satz von Sensoren umfasst:
- einen Leerlaufstellungssensor, der anzeigt, ob das Getriebe in Leerlaufstellung ist;
- einen Fahrpedal-Positionssensor, der anzeigt, ob und ggf. wie weit das Fahrpedal getreten wird;
- einen Kupplungspedal-Positionssensor, der die Position des Kupplungspedals anzeigt, wobei Informationen genügen, ob sich das Kupplungspedal in einem losgelassenen (nicht getretenen) bzw. in einem getretenen bzw. in einem niedergetretenen Zustand befindet.
- einen Bremspedalschalter, der anzeigt, ob das Bremspedal getreten wird.

Für viele bekannte SIG-Strategien wäre statt des Kupplungspedal-Positionssensors ein wesentlich aufwändigerer Sensor erforderlich, der die Position der Kupplungsplatten direkt abfühlt statt lediglich die Pedalposition abzufühlen.

Gewöhnlich wird der Verbrennungsmotor nur dann automatisch gestoppt, wenn das Kraftfahrzeug im Stillstand ist oder weniger als eine Geschwindigkeit hat, die weit unterhalb der Geschwindigkeit liegt, bei der man im niedrigsten Gang fahren kann, wenn die Kupplung geschlossen ist und der Verbrennungsmotor auf Leerlaufdrehzahl ist, z. B. eine Fahrzeuggeschwindigkeit unterhalb von 3 km/h. Stopp/Start bei diesen niedrigen Geschwindigkeiten wird SSS (Static Stop-Start) genannt.

RSS (Roll Stop-Start) ist eine Stopp/Start-Strategie, welche den Verbrennungsmotor auch bei höheren Geschwindigkeit stoppen bzw. neu starten kann, z. B. bis zu Fahrzeuggeschwindigkeiten um 12 km/h, um die Zeit mit gestopptem Verbrennungsmotor zu maximieren. In diesem Fall sind weitere Überlegungen wichtig, z. B. weil Fahren mit Leerlaufdrehzahl in diesem Geschwindigkeitsbereich liegt. Beim Fahren mit Leerlaufdrehzahl tritt der Fahrer nicht auf das Fahrpedal, sondern er reguliert die Antriebskraft durch Modulieren der Kupplungsposition, indem er mehr oder weniger weit auf das Kupplungspedal tritt. Dabei wird der Leerlaufdrehzahlregler zur Steuerung des Motordrehmoments verwendet.

Es werden nun einige Bespiele für verschiedene Fahrsituationen und eine jeweils günstige Stopp/Start-Strategie beschrieben.

### Annäherung an eine Verkehrsampel:

- Stoppe den Verbrennungsmotor bei einer Fahrzeuggeschwindigkeit um 12 km/h, wenn der Fahrer den Antriebsstrang öffnet (das Kupplungspedal niedertritt oder in den Leerlauf schaltet) und eine Anhalteabsicht anzeigt, indem er auf das Bremspedal tritt.
- Starte den Verbrennungsmotor neu, wenn der Fahrer anzeigt, dass Vortrieb benötigt wird.
- Starte den Verbrennungsmotor nicht frühzeitig, wenn der Fahrer einen Gang einlegt, aber keine Absicht anzeigt, das Kraftfahrzeug in Bewegung zu versetzen.
- Um die Füße während des Wartens ruhen zu lassen, möchte der Fahrer möglicherweise alle Pedale während der gestoppten Phase loslassen.

### Annäherung an eine Kreuzung:

- Stoppe den Verbrennungsmotor bei einer Fahrzeuggeschwindigkeit um 12 km/h, wenn der Fahrer den Antriebsstrang öffnet und auf das Bremspedal tritt.
- Starte den Verbrennungsmotor frühzeitig neu oder breche das Stoppen ab, wenn der Fahrer anzeigt, dass Vortrieb benötigt wird.

### Annäherung an einen Verkehrsstau:

- Stoppe den Verbrennungsmotor, wenn der Fahrer den Antriebsstrang vollständig öffnet und eine Anhalteabsicht anzeigt, indem er auf das Bremspedal tritt.
- Starte den Verbrennungsmotor neu, wenn der Fahrer den Fuß vom Bremspedal nimmt; während sich das Kraftfahrzeug noch bewegt, starte auch dann neu, wenn der Fahrer die Kupplungsposition moduliert. Dies ermöglicht Fahren mit Leerlaufdrehzahl.
- Starte den Verbrennungsmotor neu, wenn der Fahrer anzeigt, dass Vortrieb benötigt wird.

### Systeminduzierte Neustarts:

- Wenn das Getriebe bei losgelassenem Kupplungspedal in Leerlaufstellung ist (so dass es keine schnellen Änderungen geben kann), kann der Verbrennungsmotor sicher neu gestartet werden, wenn ein Subsystem des Kraftfahrzeugs wie z. B. eine Klimaanlage, ein Unterdruck-Bremskraftverstärker u. dgl. Leistung vom Verbrennungsmotor benötigt.
- Wenn bei niedergetretener Kupplung ein Gang eingelegt ist, darf der Verbrennungsmotor nur neu gestartet werden, wenn das Kraftfahrzeug nicht im Stillstand ist. Bei einem rollenden Kraftfahrzeug ist der Fahrer gewöhnlich aufmerksamer und wird daher nicht durch einen Neustart überrascht, der im Stillstand des Kraftfahrzeugs mit einem Loslassen des Kupplungspedals kollidieren könnte.

Für eine detaillierte Beschreibung der Bedingungen zum Stoppen oder Starten des Verbrennungsmotor werden die Signalstatus von verschiedenen Sensoren wie folgt eingeführt:

| | **Name** | **Signalstatus** | **Bedeutung** |
|---|---|---|---|
| Fahrpedal | Beschleunigungs-Status | POS_TQ | Fahrer fordert positives Drehmoment am Schwungrad an |
| | | NEG_TQ | Fahrer fordert negatives (oder null) Drehmoment am Schwungrad an |
| Bremspedal | Brems-Status | LOSGELASSEN | Bremspedal ist nicht getreten |
| | | GETRETEN | Bremspedal ist getreten |
| Kupplungspedal | Kupplungs-Status | LOSGELASSEN | Kupplungspedal ist so weit losgelassen, dass die Kupplung geschlossen ist |
| | | GETRETEN | Kupplungspedal ist getreten, aber die Kupplung ist möglicherweise nicht offen |
| | | NIEDERGETRETEN | Kupplungspedal ist so weit getreten, dass die Kupplung offen ist |
| Getriebe | Getriebe-Status | LEERLAUF | Getriebe ist in Leerlaufstellung |
| | | GANG EINGELEGT | Getriebe ist nicht in Leerlaufstellung |
| Verbrennungsmotor | Motor-Status | LÄUFT | Motor läuft |
| | | STOPPT | Motor ist dabei zu stoppen, aber noch nicht gestoppt |
| | | GESTOPPT | Motor ist gestoppt |

### A. Bedingungen für das Stoppen des Verbrennungsmotors

Es gibt grundsätzlich zwei Möglichkeiten, das Stoppen des Verbrennungsmotors auszulösen. Die eine ist das traditionelle Stoppen, wenn das Getriebe in Leerlaufstellung ist. Die andere ist das Stoppen bei eingelegtem Gang.

### 1. Motorstopp bei Getriebe in Leerlaufstellung:

Wenn alle folgenden Bedingungen eine voreingestellte Zeit lang erfüllt sind:
- Motor-Status ist LÄUFT
- Kupplungs-Status ist LOSGELASSEN
- Getriebe-Status ist LEERLAUF
- Beschleunigungs-Status ist NEG_TQ
- Fahrzeuggeschwindigkeit ist unterhalb eines oberen Schwellenwerts (für RSS) ist der Verbrennungsmotor zu stoppen.

### 2. Motorstopp bei eingelegtem Gang:

Wenn alle folgenden Bedingungen eine voreingestellte Zeit lang erfüllt sind, wobei diese Zeit eine andere sein kann als für Motorstopp bei Getriebe in Leerlaufstellung:
- Motor-Status ist LÄUFT
- Beschleunigungs-Status ist NEG_TQ
- Fahrzeuggeschwindigkeit ist unterhalb des oberen Schwellenwerts (für RSS)
- Kupplungs-Status ist NIEDERGETRETEN
- Brems-Status ist GETRETEN
ist der Verbrennungsmotor zu stoppen.

Die beiden obigen Stoppbedingungen gelten sowohl für RSS als auch für SSS, so dass der Fahrer keine geschwindigkeitsabhängige Änderung des Stoppverhaltens spürt. In beiden Fällen gibt es zwei Indikatoren, dass der Fahrer tatsächlich nicht so bald Vortrieb anfordern wird. Für Motorstopp bei Getriebe in Leerlaufstellung hat der Fahrer in den Leerlauf geschaltet und das Kupplungspedal losgelassen, was anzeigt, dass er sich nicht mitten in einem Schaltvorgang befindet, sondern einige Zeit im Leerlauf zu bleiben beabsichtigt. Für Motorstopp bei eingelegtem Gang hat der Fahrer durch Niedertreten des Kupplungspedals den Antriebsstrang geöffnet und gleichzeitig die Fahrzeugbremse betätigt, was anzeigt, dass er tatsächlich langsamer werden will und keine Vortriebskraft benötigt.

### B. Bedingungen für das Starten des Verbrennungsmotors

### 1. Motorstart beim Treten des Fahrpedals

Wenn alle folgenden Bedingungen erfüllt sind:
- Motor-Status ist GESTOPPT oder STOPPT
- Kupplungs-Status ist NIEDERGETRETEN oder Getriebe-Status ist LEERLAUF
- Beschleunigungs-Status ist POS_TQ
ist der Verbrennungsmotor neu zu starten.

### 2. Motorstart beim Loslassen des Bremspedals

Wenn alle folgenden Bedingungen erfüllt sind:
- Motor-Status ist GESTOPPT oder STOPPT
- Fahrzeuggeschwindigkeit ist oberhalb eines unteren Schwellenwerts (für SSS)
- Getriebe-Status ist GANG EINGELEGT
- Kupplungs-Status ist nicht LOSGELASSEN
- Brems-Status wechselt zu LOSGELASSEN;
oder wenn alle folgenden Bedingungen erfüllt sind:
- Motor-Status ist GESTOPPT oder STOPPT
- Fahrzeuggeschwindigkeit ist unterhalb des unteren Schwellenwerts (für SSS)
- Getriebe-Status ist GANG EINGELEGT
- Kupplungs-Status ist NIEDERGETRETEN
- optional: Handbremse ist gelöst
- Brems-Status wechselt zu LOSGELASSEN
ist der Verbrennungsmotor neu zu starten.

Um Fahren mit Leerlaufdrehzahl zu ermöglichen, wird der Verbrennungsmotor beim Loslassen der Bremspedals neu gestartet; bei einer Geschwindigkeit oberhalb von Stillstand wird er sogar dann neu gestartet, wenn der Kupplungs-Status nicht NIEDERGETRETEN, sondern lediglich GETRETEN ist.

Für fahrerinduzierte Neustarts ist Regel Nummer Eins, dass der Verbrennungsmotor gestartet wird, wenn der Fahrer das Fahrpedal betätigt. Diese Bedingung umfasst sogen. Ferse-Fußspitze-Starts, bei denen der Fahrer die Ferse auf dem Bremspedal hat, dann mit der Fußspitze auf das Fahrpedal tritt und dann das Bremspedal loslässt.

Um Fahren mit Leerlaufdrehzahl zu ermöglichen, wobei der Fahrer das Fahrpedal nicht berührt, werden Neustarts auch dann ausgelöst, wenn das Bremspedal losgelassen wird (Übergang von GETRETEN zu LOSGELASSEN). Im Stillstand muss das Kupplungspedal niedergetreten sein, um eine unbeabsichtigte Bewegung des Kraftfahrzeugs zu vermeiden; optional könnte der Status der Handbremse geprüft werden: Ist die Handbremse angezogen, beabsichtigt der Fahrer nicht, mit Leerlaufdrehzahl zu fahren. Bei höheren Fahrzeuggeschwindigkeiten sollte ein Neustart auch dann ausgelöst werden, wenn der Fahrer schon die Kupplungsposition moduliert und die Kupplung den Status GETRETEN erreicht hat. Da sich das Kraftfahrzeug ohnehin bewegt und der Fahrer die Kupplung in Richtung auf die geschlossene Position bewegt, ist der Fahrer auf Änderungen der Fahrzeuggeschwindigkeit vorbereitet.

Allgemein ist zu erwägen, Neustarts beim Loslassen des Bremspedals im Stillstand (d.h. bei Fahrzeuggeschwindigkeiten unter dem unteren Schwellenwert) nicht zu erlauben. In so einem Fall würde nur der Neustart beim Treten des Fahrpedals zur Verfügung stehen, sobald diese niedrigen Fahrzeuggeschwindigkeiten erreicht sind. Zumindest bei Benzinmotoren, die bei niedrigen Motordrehzahlen weniger Drehmoment haben als Dieselmotoren, müssen Fahrer ohnehin auf das Fahrpedal treten, damit das Kraftfahrzeug schneller wird.

Wie oben erwähnt, möchte der Fahrer während der gestoppten Phase möglicherweise sämtliche Pedale loslassen. In so einem Fall nimmt der Fahrer die Füße gewöhnlich gleichzeitig von den Kupplungs- und Bremspedalen. Tatsächlich geschieht dies aber nicht wirklich gleichzeitig, sondern mit einer kleinen Verzögerung zwischen dem Loslassen der beiden Pedale. Ist das Kupplungspedal in der Position GETRETEN oder LOSGELASSEN, bevor das Bremspedal die Position LOSGELASSEN erreicht, bleibt der Verbrennungsmotor gestoppt. Kommt andererseits das Bremspedal in die Position LOSGELASSEN, bevor das Kupplungspedal die Position NIEDERGETRETEN verlassen hat, wird ein Neustart ausgelöst, der abgebrochen werden muss, wenn sich das Kupplungspedal nach GETRETEN bewegt, bevor der Verbrennungsmotor richtig läuft.

### 3. Systeminduzierte Motorstarts

Wenn alle folgenden Bedingungen erfüllt sind:
- Motor-Status ist GESTOPPT oder STOPPT
- Getriebe-Status ist LEERLAUF
- Kupplungs-Status ist LOSGELASSEN
- Anforderung nach einem laufenden Verbrennungsmotor
oder wenn alle folgenden Bedingungen erfüllt sind:
- Motor-Status ist GESTOPPT oder STOPPT
- Kupplungs-Status ist NIEDERGETRETEN
- Fahrzeuggeschwindigkeit ist oberhalb des unteren Schwellenwerts (für SSS)
- optional: Brems-Status ist GETRETEN
- Anforderung nach einem laufenden Verbrennungsmotor
ist der Verbrennungsmotor neu zu starten.

Systeminduzierte Neustarts bei eingelegtem Gang werden möglicherweise auch nicht ausgelöst, wenn das Kraftfahrzeug im Stillstand ist und wenn das Bremspedal losgelassen ist.

Es gibt verschiedene Subsysteme im Kraftfahrzeug, welche einen Neustart des Verbrennungsmotors anfordern können. Klare Fälle sind die Batterie - wenn sie erschöpft, muss der Verbrennungsmotor neu gestartet werden, bevor es dafür zu spät ist -, ein Unterdruck-Bremskraftverstärker oder eine Klimaanlage. Aber auch wenn das Kraftfahrzeug eine abschüssige Straße hinab zu rollen oder zu beschleunigen beginnt, kann es günstig sein, den Verbrennungsmotor schon neu zu starten, damit alle Subsysteme nötigenfalls sofort voll funktionsfähig sind.

Solange das Getriebe in Leerlaufstellung ist (und das Kupplungspedal losgelassen ist, so dass die Kupplung nicht gerade in einem Übergangszustand ist), kann der Verbrennungsmotor stets sicher neu gestartet werden. Wenn bei dem Getriebe ein Gang eingelegt ist, muss der Fahrer das Kupplungspedal niedergetreten halten, solange sich das Kraftfahrzeug bewegt; unter diesen Bedingungen ist es sicher, den Verbrennungsmotor neu zu starten, wenn eine Anforderung nach einem laufenden Verbrennungsmotor empfangen wird. Bei einem stehenden Kraftfahrzeug kann es jedoch sein, dass der Fahrer das Kupplungspedal in dem Moment loslässt, in dem von einem Subsystem eine Anforderung nach einem laufenden Verbrennungsmotor empfangen wird; ein Neustart des Verbrennungsmotors könnte dann zu einer unbeabsichtigten Fahrzeugbewegung führen. Daher kann in diesem Fall zusätzlich verlangt werden, dass der Fahrer auf das Bremspedal tritt, damit ein systeminduzierter Neustart ausgelöst wird, wenn ein Gang eingelegt ist. Außerdem kann es zweckmäßig sein, sicherzustellen, dass systeminduzierte Neustarts nur stattfinden können, wenn sich der Fahrer im Kraftfahrzeug befindet.

Wie beschrieben, basieren einige der Bedingungen für das Stoppen oder Neustarten des Verbrennungsmotors auch auf der aktuellen Fahrzeuggeschwindigkeit. Das heißt, die oben beschriebenen Bedingungen für das Stoppen oder Neustarten des Verbrennungsmotors sind in bestimmten Geschwindigkeitsbereichen aktiv. Dies ist in der Figur veranschaulicht. An den Grenzen der Geschwindigkeitsbereiche kann es ein Hystereseverhalten geben, um ein Hin- und Herschalten zwischen verschiedenen Stopp/Start-Verhalten zu verhindern, welches den Fahrer irritieren könnte.

## Patentansprüche

1. Verfahren zum Betrieb einer Stopp/Start-Automatik in einem Kraftfahrzeug mit Verbrennungsmotor, manuell betätigtem Getriebe und pedalbetätigter Kupplung, wobei der Verbrennungsmotor unter vorbestimmten Bedingungen auch bei eingelegtem Gang automatisch gestoppt bzw. neu gestartet wird, wobei die Bedingungen, unter denen der Verbrennungsmotor automatisch neu gestartet wird, zwei Indikatoren umfassen, die anzeigen, dass ein automatischer Neustart des Verbrennungsmotors sicher und erwünscht ist, nämlich einen Indikator, der anzeigt, dass ein Neustart sicher ist, und einen Indikator, der anzeigt, dass der Fahrer einen Neustart wünscht, wobei der Indikator, der anzeigt, dass ein Neustart sicher ist, auf Signalen von zwei Sensoren basiert, nämlich einem Sensor, der abfühlt, ob das Getriebe in Leerlaufstellung ist, und einem Sensor, der die Position des Kupplungspedals direkt abfühlt, indem er erfasst, ob das Kupplungspedal losgelassen oder getreten oder niedergetreten ist,
**dadurch gekennzeichnet, dass**
ein gestoppter oder stoppender Verbrennungsmotor bei eingelegtem Gang automatisch neu gestartet wird, wenn als der Indikator, der anzeigt, dass ein Neustart sicher ist, sowohl die Fahrzeuggeschwindigkeit über einem voreingestellten unteren Schwellenwert für Static-Stop-Start (SSS) liegt als auch das Kupplungspedal nicht losgelassen, das heißt getreten oder niedergetreten ist, und wenn außerdem als der Indikator, der anzeigt, dass der Fahrer einen Neustart wünscht, die Position des Bremspedals von Getreten nach Nichtgetreten wechselt.

2. Verfahren nach Anspruch 1,
**dadurch gekennzeichnet, dass**
ein gestoppter oder stoppender Verbrennungsmotor auch dann automatisch neu gestartet wird, wenn als der Indikator, dass ein Neustart sicher ist, entweder das Kupplungspedal niedergetreten ist oder das Getriebe in Leerlaufstellung ist, und wenn als der Indikator, der anzeigt, dass der Fahrer einen Neustart wünscht, das Fahrpedal getreten ist.

3. Verfahren nach Anspruch 1 oder 2,
**dadurch gekennzeichnet, dass**
ein gestoppter oder stoppender Verbrennungsmotor bei eingelegtem Gang auch dann automatisch neu gestartet wird, wenn als der Indikator, der anzeigt, dass ein Neustart sicher ist, sowohl die Fahrzeuggeschwindigkeit unter dem voreingestellten unteren Schwellenwert liegt als auch das Kupplungspedal niedergetreten ist sowie als optionale Bedingung die Handbremse gelöst ist, und wenn außerdem als der Indikator, der anzeigt, dass der Fahrer einen Neustart wünscht, die Position des Bremspedals von Getreten nach Nichtgetreten wechselt.

4. Verfahren nach einem der Ansprüche 1 bis 3,
**dadurch gekennzeichnet, dass**
ein gestoppter oder stoppender Verbrennungsmotor auch auf eine von einem Subsystem des Kraftfahrzeug empfangene Anforderung nach einem laufenden Verbrennungsmotor hin automatisch neu gestartet wird, wenn
c) das Getriebe in Leerlaufstellung ist und das Kupplungspedal losgelassen ist, oder
d) das Kupplungspedal niedergetreten ist und die Fahrzeuggeschwindigkeit über einem voreingestellten unteren Schwellenwert liegt sowie als optionale Bedingung das Bremspedal getreten ist.

5. Verfahren nach einem der vorhergehenden Ansprüche,
**dadurch gekennzeichnet, dass**
der Sensor, der die Position des Kupplungspedals direkt abfühlt, lediglich erfasst, ob das Kupplungspedal losgelassen oder getreten oder niedergetreten ist.

6. Vorrichtung zum Betrieb einer Start/Stopp-Automatik in einem Kraftfahrzeug mit Verbrennungsmotor, manuell betätigtem Getriebe und pedalbetätigter Kupplung,
**dadurch gekennzeichnet, dass**
die Vorrichtung zur Durchführung des Verfahrens nach einem der vorhergehenden Ansprüche eingerichtet ist.

## Claims

1. Method for the operation of an automatic stop/start system in a motor vehicle with an internal combustion engine, a manually operated gearbox and a pedal-operated clutch, wherein the internal combustion engine is automatically stopped or restarted under predetermined conditions even with a gear engaged, wherein the conditions under which the internal combustion engine is automatically restarted include two indicators that indicate that an automatic restart of the internal combustion engine is safe and desired, namely an indicator that indicates that a restart is safe and an indicator that indicates that the driver wants a restart, wherein the indicator that indicates that a restart is safe is based on signals of two sensors, namely a sensor that senses whether the gearbox is in neutral and a sensor that directly senses the position of the clutch pedal, in that said sensor detects whether the clutch pedal is released or depressed or is pressed down,
**characterized in that**
a stopped or stopping internal combustion engine with a gear engaged is automatically restarted if both the speed of the vehicle is above a preset lower threshold for Static Stop-Start (SSS) and also the clutch pedal is not released, i.e. is depressed or is pressed down, as the indicator that indicates that a restart is safe, and if moreover the position of the brake pedal changes from depressed to not depressed as the indicator that indicates that the driver wants a restart.

2. Method according to Claim 1,
**characterized in that**
a stopped or stopping internal combustion engine is also then automatically restarted if either the clutch pedal is pressed down or the gearbox is in neutral as the indicator that a restart is safe and if the gas pedal is depressed as the indicator that indicates that the driver wants a restart.

3. Method according to Claim 1 or 2,
**characterized in that**
a stopped or stopping internal combustion engine with a gear engaged is also then automatically restarted if both the speed of the vehicle is below the preset lower threshold and also that the clutch pedal is pressed down and as an optional condition the parking brake is released as the indicator that indicates that a restart is safe, and if moreover the position of the brake pedal is changed from depressed to not depressed as the indicator that indicates that the driver wants a restart.

4. Method according to any one of the Claims 1 to 3, ch
aracterized in that
a stopped or stopping internal combustion engine is also automatically restarted on receiving a demand from a subsystem of the motor vehicle for a running internal combustion engine if
c) the gearbox is in neutral and the clutch pedal is released, or
d) the clutch pedal is pressed down and the speed of the vehicle is above a preset lower threshold and that the brake pedal is depressed as an optional condition.

5. Method according to any one of the preceding claims,
**characterized in that**
the sensor that directly senses the position of the clutch pedal only detects whether the clutch pedal is released or depressed or pressed down.

6. Device for the operation of an automatic start/stop system in a motor vehicle with an internal combustion engine, a manually operated gearbox and a pedal-operated clutch,
**characterized in that**
the device is arranged for implementing the method according to any one of the preceding claims.

## Revendications

1. Procédé de fonctionnement d'un système de marche/arrêt automatique dans un véhicule automobile comprenant un moteur à combustion interne, une boîte de vitesses à commande manuelle et un embrayage à commande à pédale, le moteur à combustion interne étant arrêté et remis en marche automatiquement dans des conditions prédéterminées également avec une vitesse enclenchée, les conditions dans lesquelles le moteur à combustion interne est redémarré automatiquement comprenant deux indicateurs qui indiquent qu'un redémarrage automatique du moteur à combustion interne est sûr et souhaitable, à savoir un indicateur qui indique qu'un redémarrage est sûr et un indicateur qui indique que le conducteur souhaite un redémarrage, l'indicateur qui indique qu'un redémarrage est sûr étant basé sur des signaux provenant de deux capteurs, à savoir un capteur qui détecte si la boîte de vitesses est dans une position de marche à vide et un capteur qui détecte directement la position de la pédale d'embrayage en détectant si la pédale d'embrayage est relâchée ou enfoncée ou complètement enfoncée,
**caractérisé en ce**
**qu'**un moteur à combustion interne arrêté ou s'arrêtant lorsqu'une vitesse est enclenchée est redémarré automatiquement si, lorsque l'indicateur indique qu'un redémarrage est sûr, à la fois la vitesse du véhicule est au-dessus d'une valeur seuil inférieure préajustée pour une marche/arrêt statique (static stop-start SSS) et la pédale d'embrayage n'est pas relâchée, c'est-à-dire qu'elle est enfoncée ou complètement enfoncée, et si en outre, lorsque l'indicateur indique que le conducteur souhaite un redémarrage, la position de la pédale de frein passe d'une position enfoncée à non enfoncée.

2. Procédé selon la revendication 1,
**caractérisé en ce**
**qu'**un moteur à combustion interne arrêté ou s'arrêtant est également redémarré automatiquement si, lorsque l'indicateur indique qu'un redémarrage est sûr, soit la pédale d'embrayage est enfoncée complètement, soit la boîte de vitesses est en position de marche à vide, et si, lorsque l'indicateur indique que le conducteur souhaite un redémarrage, la pédale d'accélération est enfoncée.

3. Procédé selon la revendication 1 ou 2,
**caractérisé en ce**
**qu'**un moteur à combustion interne arrêté ou s'arrêtant est également redémarré automatiquement lorsqu'une vitesse est enclenchée si, lorsque l'indicateur indique qu'un redémarrage est sûr, à la fois la vitesse du véhicule est en dessous de la valeur seuil inférieure préajustée et la pédale d'embrayage est enfoncée complètement et, en tant que condition optionnelle, le frein à main est relâché, et si en outre, lorsque l'indicateur indique que le conducteur souhaite un redémarrage, la position de la pédale de frein passe de la position enfoncée à non enfoncée.

4. Procédé selon l'une quelconque des revendications 1 à 3,
**caractérisé en ce**
**qu'**un moteur à combustion interne arrêté ou s'arrêtant est également redémarré automatiquement en réponse à une demande, reçue depuis un sous-système du véhicule automobile, de faire tourner le moteur à combustion interne, si
c) la boîte de vitesses est en position de marche à vide et la pédale d'embrayage est relâchée, ou
d) la pédale d'embrayage est enfoncée complètement et la vitesse du véhicule est au-dessus d'une valeur seuil inférieure préajustée et, en tant que condition optionnelle, la pédale de frein est enfoncée.

5. Procédé selon l'une quelconque des revendications précédentes,
**caractérisé en ce que**
le capteur qui détecte directement la position de la pédale d'embrayage, détecte seulement si la pédale d'embrayage est relâchée ou enfoncée ou complètement enfoncée.

6. Dispositif de fonctionnement d'un système de marche/arrêt automatique dans un véhicule automobile comprenant un moteur à combustion interne, une boîte de vitesses à commande manuelle et un embrayage à commande à pédale,
**caractérisé en ce que**
le dispositif est prévu pour mettre en oeuvre le procédé selon l'une quelconque des revendications précédentes.
